# EUROPEAN PATENT APPLICATION

(11) **EP 4 729 361 A1**
(43) Date of publication of application: **22.04.2026**
(21) Application number: 24207225.4
(22) Date of filing: 17.10.2024
(51) Int. Cl.: B60R 9/06, B60R 9/10

(54) **REAR LOAD CARRIER**

(30) Priority: 16.10.2024 CN 202411449374
(71) Applicant: Carman Enterprise Co., Ltd, Hangzhou 311121 (CN)
(72) Inventor: Shuoyang, Li, Yuhang District, Hangzhou (CN)
(74) Representative: Paul & Albrecht Patentanwälte PartG mbB

(57) **Abstract**

The present invention relates to a rear load carrier for mounting on a motor vehicle with
a supporting frame (1), and
a connection device (3) provided on the supporting frame (1) for fastening the rear load carrier to a trailer coupling on the vehicle side.

The connection device (3) comprises
a base body (4) open at a bottom side thereof, as well as
two retaining elements which form a downwardly open receptacle between them and can be removed relative to each other between a retaining position and an insertion position.
An actuation device (15) is coupled to the first retaining element (5) for pivoting the first retaining element (5) to and fro between the retaining position and the insertion position.

The second retaining element (6) is a stationary retaining element mounted to the base body (4) in a non pivotable manner, wherein the position of the second retaining element (6) in the base body (4) can be adjusted along an adjustment path, in a direction transverse to the pivot axis (X) of the first retaining element (5) in order to adjust the distance between the second retaining element (6) and the pivot axis (X) of the first retaining elements (5).

## Description

The present invention relates to a rear load carrier for mounting on a motor vehicle with
a supporting frame, and
a connection device provided on the supporting frame for fastening the rear load carrier to a trailer coupling on the vehicle side,
wherein the connection device comprises
   a base body open at a bottom side thereof,
   two retaining elements which form a downwardly open receptacle between them for a connection head of the trailer coupling, the first retaining element being mounted on the base body so as to be pivotable about a pivot axis preferably in a vertical pivot plane, and
   an actuation device coupled to the first retaining element for pivoting the first retaining element to and fro between a retaining position, in which the retaining elements are close to each other in order to engage around a connection head of a trailer coupling in the receptacle, and an insertion position, in which the retaining elements are spaced apart such that the connection device can be placed on or removed from the connection head.

Load carriers for rear mounting on a motor vehicle such as an automobile are often used to transport bicycles. Typically, such a load carrier comprises a supporting frame to which, for example, profile rails for receiving the wheels of bicycles are fixed or attachable and, at its front end, a connection device by means of which the load carrier can be frictionally fixed to the connection head of a conventional trailer coupling.

A rear load carrier of the initially mention kind is disclosed in EP 3 085 581 A1. The rear load carrier comprises a supporting frame having a connection device in its front end for fastening to a trailer coupling of a vehicle. The connection device furthermore comprises a base body which is open towards its underside and two retaining elements which form a downwardly open recept-able between them for a connection head of the trailer coupling. The retaining elements are pivotable relative to one another about a common pivot axis which is formed by a common pivot bolt being guided vertically moveably by means of an oblong hole formed in the base body. The rear load carrier further comprises an actuation device having an actuation lever which is pivotally moveable with regard to the supporting frame and in consequence to the base body. The operating lever is connected to a pressure element which can come into engagement with a corresponding recess formed in at least one retaining element.

For mounting on a trailer coupling the retaining elements are pushed from their downward position upwards by the weight of rear load carrier into their holding position. Therefore they are guided by the base body as they slide over the inner surface of the base body. When the retaining elements have reached their holding position the pressure element can be brought into engagement into the recess by swiveling the actuation lever.

An alternative connection device for a rear load carrier is disclosed in EP 0 665 135 A2. This connection device comprises two retaining elements which are pivotally connected about common pivot axis which is vertically moveable with respect to a base body. When the connection device is positioned on a trailer coupling the retaining elements are moved upwards due to the weight of the load carrier. In their holding position a bolt which is mounted on an actuation device comes into engagement into a corresponding recess formed in the retaining element on the right side.

A further rear load carrier is known from EP 3 650 274 B1. This rear load carrier comprises a supporting frame having a connection device at its front end for fastening to trailer couplings of a vehicle. The connection device comprises a base body which is open towards its bottom side and two retaining elements, which form a downwardly open receptacle between them for a connection head of the trailer coupling. The retaining elements are pivotable relative to one another about two parallel pivot axis at their upper regions opposite the open bottom side, so that the end sections located below the pivot axis are moved towards each other and pressed against the connection head of a trailer coupling when the retaining elements are pivoted from their insertion position into a retaining position by means of an actuation device. The targeted application of a pressing force in the lower end sections of the retaining elements ensures that the retaining elements are in contact with the outer contour of the connection head in this area and that the rear load carrier is fixed in a defined manner by means of friction against an intentional twisting.

One of the retaining elements is adjustably disposed in the base body, so that the distance between the two pivot axis from each other is adjustable to enable the connection device to be adapted to connection heads of different sizes. In concrete terms the pivot bolt of the adjustable retaining element is guided so as to be linearly moveable.

Even though the known rear load carriers have proved themselves in practice, there is still the need for the improvement in particular with regard to the handling.

Accordingly is the object of the present invention to provide a rear load carrier of the initially mentioned kind which is easy to handle and simple in design.

According to the present invention this object is solved in the rear load carrier of the type mentioned above in that the second retaining element is a stationary retaining element mounted to the base body in a non pivotable manner, wherein the position of the second retaining element in the base body can be adjusted along an adjustment path, in particular in a linear manner, in a direction transverse to the pivot axis of the first retaining element in order to adjust the distance between the second retaining element and the pivot axis of the first retaining element in dependence of the size of a connection head, to which the rear load carrier is to be fastened.

The invention is based on the idea to have only one retaining element, which is pivotably held on the base body, and to make the second retaining element stationary, so that only the first retaining element is pivoted, whereas the second retaining element is not moved when the connection device is actuated to switch the connection device between its retaining position and its insertion position. Insofar, the rear load carrier according to the invention is simple in design compared to former existing rear load carriers. Also, the adjustment mechanism of the present invention allows the connection device and the trailer to remain at level when the size of the connection head of the trailer coupling changes, thereby preventing any tilting of the connection device and the trailer.

However, the position of the second retaining element in the base body can be adjusted along an adjustment path, preferably, in a direction transversely to the pivot axis of the first retaining element. In other words, the second retaining element can be moved in the direction to the first retaining element in case of smaller connection head, and away from the first retaining element in case of a larger connection head.

According to a preferred embodiment, guiding means are provided in order to guide an adjustment movement of the second retaining element in order to adjust the distance between the second retaining element and the pivot axis of the first retaining element.

In this case, the guiding means can be designed so as to guide an adjustment movement of the second retaining element in direction perpendicular to the pivot axis, in particular in the pivot plane, of the first retaining element and prefarably horizontally, in order to adjust the distance between the second retaining element and the pivot axis of the first retaining element.

Preferably, the guiding means are provided to guide the movement of the second retaining element on an upper end region and a lower end region thereof.

In this case, the second retaining element is guided at both its upper and lower end regions, so that smooth adjustment movements are guaranteed.

According to a further embodiment of the invention the guiding means comprise oblong guiding holes and guiding pins in engagement therewith provided on lateral sides of the second retaining element and lateral sides of the base body or a component fixed to the base body, wherein, in particular, the oblong guiding holes are provided in the second retaining element and the guiding pins are provided on the base body or the component attached thereto.

In this case, the oblong holes can be designed as through holes in the second retaining element, so that they are easy to manufacture.

According to a further embodiment of the invention, adjustment means are provided on the base body to move the second retaining element in order to adjust the position of the second retaining element in the base body.

In a preferred embodiment the adjusting means comprise an adjustment element which is provided on a rear side of the second retaining element facing away from the first retaining element in the base body, wherein the adjustment element is movable in the base body in a direction transverse to the adjustment path, and wherein the second retaining element and/or the adjustment element have engagement surfaces in contact with each other and designed in order to convert a movement of the adjustment element in one direction into an adjustment movement of the second retaining element along the adjustment path in order to adjust the distance between the second retaining element and the pivot axis of the first retaining element.

For example, the contact surfaces of the adjustment element and/or the second retaining element may be inclined or sloping with regard to their respective movement direction to convert a movement of the adjustment element into an adjustment movement of the second retaining element. In particular the contact surfaces may have the same inclination, so that there is a surface to surface contact between them. It has proven advantageous, if the inclination angle is 10° to 30° relative to the movement plane of the adjustment element which generally is a plane perpendicular to the pivot plane of the first retaining element. Nevertheless, it may be sufficient, if only one contact surface has such inclination.

Typically, the arrangement is such, that the second retaining element is moved in the direction of the pivot axis of the first retaining element, when the adjustment element is moved into the base body, but it may also be the other way around. There may be provided resilient means, which urge the second retaining element away from the pivot axis of the first retaining element, so that the retaining elements are automatically pushed apart, when the adjustment element is moved in the counter direction and gives the second retaining element free.

Moreover, the adjustment means may comprise an adjusting screw which extends through a corresponding hole of the base body from the outside thereof into the base body, wherein the adjusting screw is connected to the adjustment element in such a way, that the adjustment element is linearily moved when the adjusting screw is screwed into or out of the base body.

For example the adjusting screw may be screwed into the hole of the base body, so that it comes into contact with the adjustment element in order to push it in the direction transverse to the adjustment path, and this movement is then converted into a movement of the second retaining element in the direction of the pivot axis of the first retaining element.

As an alternative it is provided, that the adjusting screw is held in the hole of the base body rotatably around a screw axis, but in an axially fixed position, and is screwed into a threaded hole of the adjustment element.

According to a further embodiment of the invention, the adjustment element is moveable in a plane perpendicular to the pivot plane of the first retaining element, preferably in a vertical direction or in a horizontal direction. In the first case, the adjusting screw is provided at the top side or the bottom side of the base body. In the later case, it is provided on one of the lateral sides of the base body.

The first retaining element may be pivotably mounted on the base body at an upper portion opposite the open bottom side thereof. In this case, when the first retaining element is pivotably moved, its lower end region is moved away or to the second retaining element in order to open/close the receptacle.

In order to create the necessary holding forces in the retaining elements, the actuation device is preferably designed as a lever mechanism, which may be designed in different ways.

According to one embodiment, the actuation device can have an actuation lever which is pivotably mounted at its one end region to the base body and is connected, in particular flexibly, to the first retaining element by means of an intermediate lever of the actuation device such that a pivot movement of the actuation lever is converted into a pivot movement of the moveable retaining element about its pivot axis.

Peferably, the actuation lever and the intermediate lever of the actuation device are pivotable substantially in the vertical direction.

A movement of the actuation lever leads to the simultaneous pivoting movement of the first retaining element. As a consequence, when the connection device is placed in the connection head of the trailer coupling, the free lower end section of the first retaining element located below the pivot axis is moved towards the first retaining element. This cinematic means, that in order to connect the rear load carrier to a motor vehicle, the connection device only has to be placed on the connection head of the trailer coupling from above and no horizontal movement is required, since the contour of the contact surface of the retaining elements automatically center the connection device on the connection head.

The intermediate lever is preferably designed as toggle lever mechanism. Such toggle lever mechanism has the advantage that a high pressing force can be applied to the retaining elements due to the cinematic arrangement.

In an advantageous manner, a locking device may be provided in order to lock the actuation device in an end position corresponding to the retaining position of the first retaining element.

In a further configuration the retaining elements each comprise a lay-on surface which is designed to abut a neck of the connection head which joins this spherical section of the connection head at the bottom. Preferably, the lay-on surface has a contour corresponding to a portion of a cylinder shell. A connection head of a conventional trailer coupling comprises a spherical section and a substantially cylindrical neck connected underneath. By placing the retaining elements on the neck of the connection head, the rear load carrier is arranged at a defined position relative to it. At the same time, a supporting force can be applied to the rear load carrier via the neck of the connection head, which counteracts the weight forces occurring due to the loads attached to the rear load carrier.

The retaining elements may each comprise a contact surface which is designed to abut a spherical section of the connection head, the contact surface in particular having a contour corresponding to a partial section of the shere.

By placing the retaining elements on the spherical section of a connection head, the rear load carrier is correctly positioned on the connection head in all directions. In addition, pressing force can be exerted on the contact surface, which counteracts intentional rotation of the rear load carrier about the vertical axis.

For further details of the invention it is referred to the sub claims as well as to the following description of an embodiment of the invention with reference to a drawing. In the drawings shows:
- Figure 1: a rear load carrier according to the present invention in a perspective view;

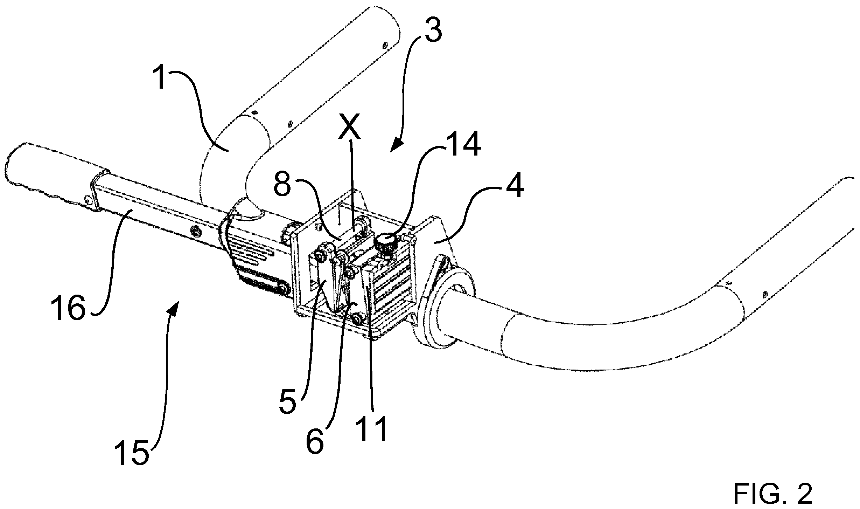

- Figure 2: the supporting frame, the connection device and the actuation device of the rear load carrier of figure 1 in a perspective view, wherein the base body and the connection device is partly removed;

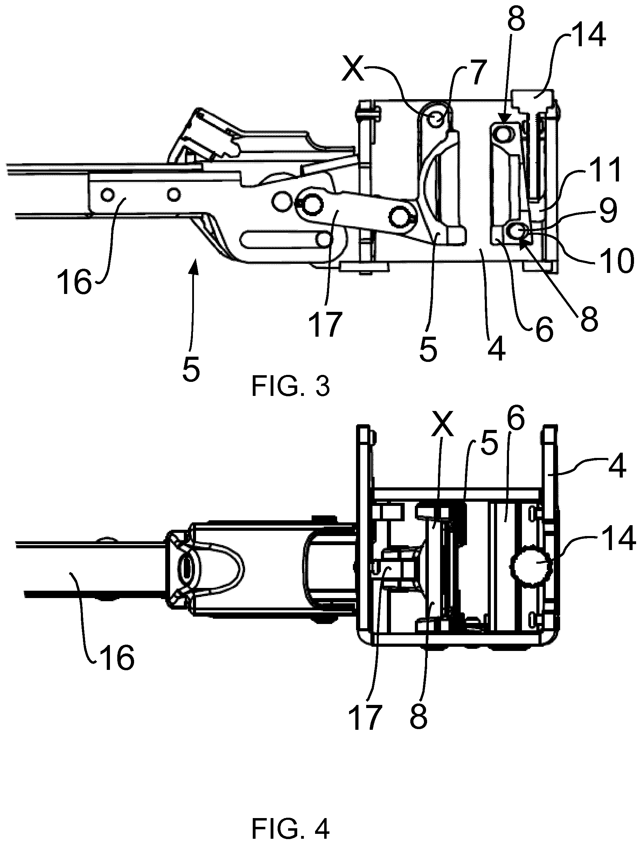

- Figure 3: the connection device and the actuation device in a longitudinal sectional view;
- Figure 4: the connection device and the actuation device of the rear load carrier in a top view with a top plate of the base body broken away;
- Figure 5: a schematic view of the connection device and the actuation device in a longitudinal sectional view;
- Figure 6: the second retaining element of the connection device in a perspective view; and
- Figure 7: the adjustment element of the rear load carrier in a perspective view.

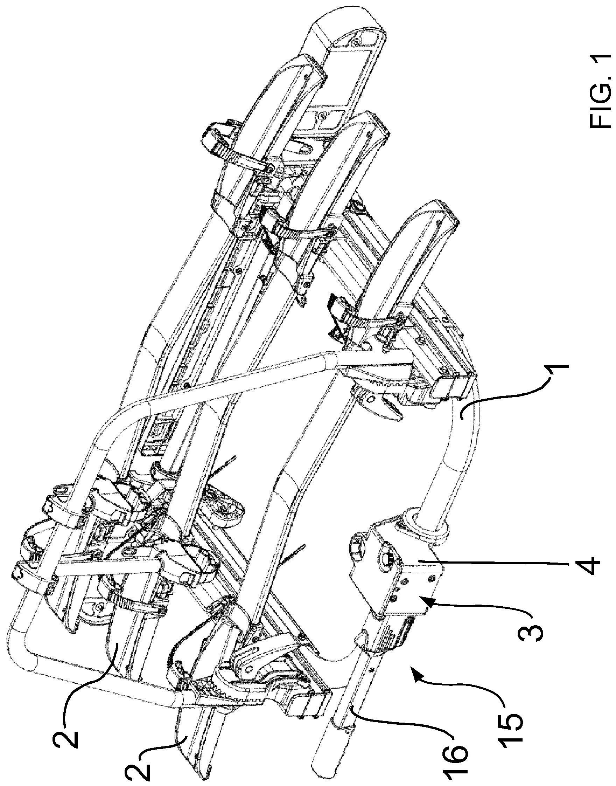

Figure 1 shows a rear load carrier according to the present invention for mounting on a motor vehicle. The rear load carrier comprises a supporting frame1 , which is generally U-shaped when viewed from above. The supporting frame 1 serves for the support of loads or fasteners of loads. In the present case, rails 2 are attached to the two U-legs of the supporting frame 1 to accommodate and fasten wheels of bicycles.

The rear load carrier further comprises a connection device 3 provided on the supporting frame 1 for fastening the rear load carrier to a trailer coupling on the vehicle side. The trailer coupling, which is not shown in the drawings, has a connection head with an upper spherical section and a neck, which is substantially cylindrical and adjoins the upper spherical section at the bottom thereof.

The connection device 3 comprises a base body 4, which is open at the bottom side thereof, as well as two retaining elements, namely a first retaining element 5 and a second retaining element 6, which form a downwardly open receptacle between them for the connection head of the trailer coupling. The retaining elements 5, 6 each have a contact surface 5a, 6a adapted to abut the spherical portion of the trailer connection head, the contact surfaces 5a, 6a having a contour corresponding to a partial section of a sphere. Moreover, the retaining elements 5, 6 have a lay-on surface 5b, 6b, which is designed to abut the neck of the connection head. This purpose, the lay-on surface 5b, 6b has a contour corresponding to a portion of a cylinder shell.

The first, in the figures left retaining element 5 is mounted to the base body 4 so as to be pivotable about a pivot axis X in a vertical pivot plane. Specifically, the first retaining element 5 is mounted to the base body 4 by means of a horizontal pivot bolt 7 which defines the pivot axis X.

The second retaining element 6 is a stationary retaining element mounted to the base body 4 in a non pivotable manner.

However, the position of the second retaining element 6 in the base body 4 can be adjusted along an adjustment path in a linear manner in a direction transverse to the pivot axis X of the first retaining element 5 in order to adjust the distance between the second retaining element 6 and the pivot axis X of the first retaining element 5 in dependence of the size of a connection head, to which the rear load carrier is to be fastened.

In the present case, guiding means 8 are provided in order to guide the adjustment movement of the second retaining element 6 along the adjustment path. The guiding means 8 are designed so as to guide an adjustment movement of the second retaining element 6, which is horizontally oriented, perpendicular to the pivot axis X and in the vertical pivot plane. Specifically, the guiding means 8 comprise four pairs of oblong guiding holes 9 and guiding pins 10 in engagement therewith, which are provided on lateral side of the second retaining element 6 and the base body 4. In the present case, the oblong guiding holes 9 are provided in the second retaining element 6 and formed as a through hole in the second retaining element 6, and the guiding pins 10 are provided on the base body 4. It is to be noted, that pairs of oblong guiding holes 9 and corresponding guiding pins 10 are provided on the upper end region and the lower end region of the second retaining element 6 both lateral sides thereof.

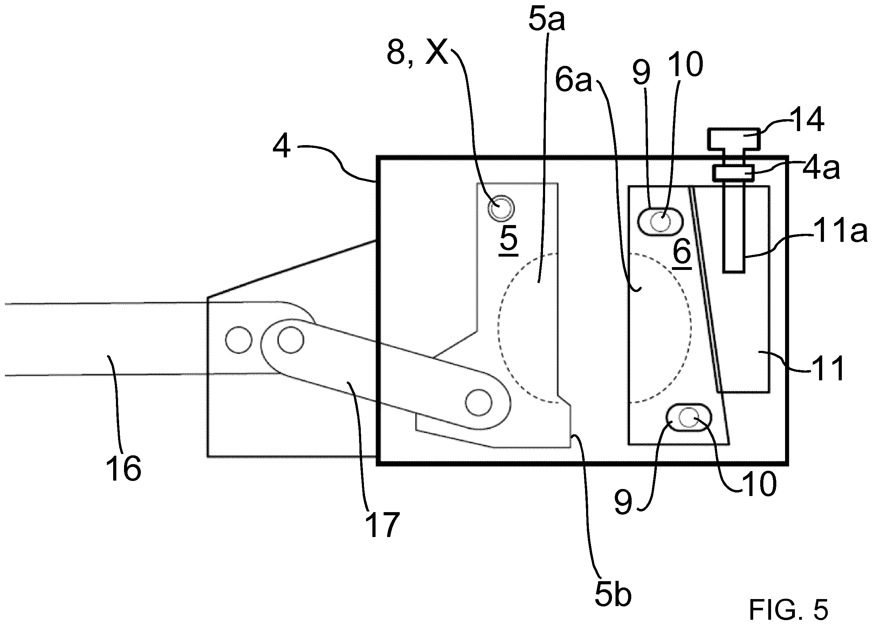

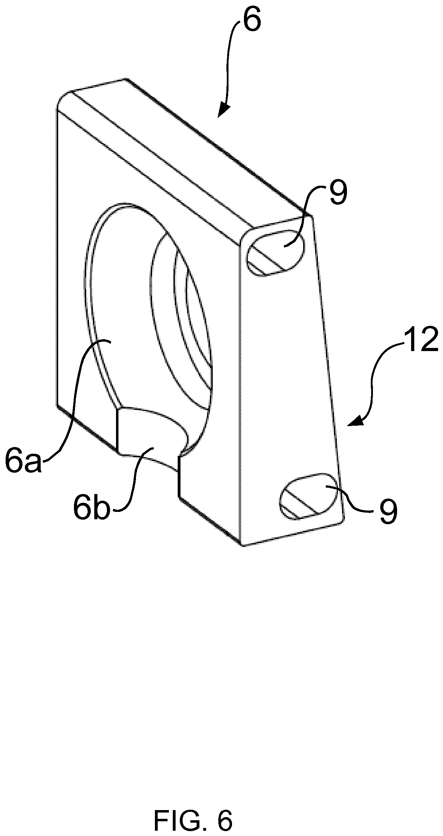

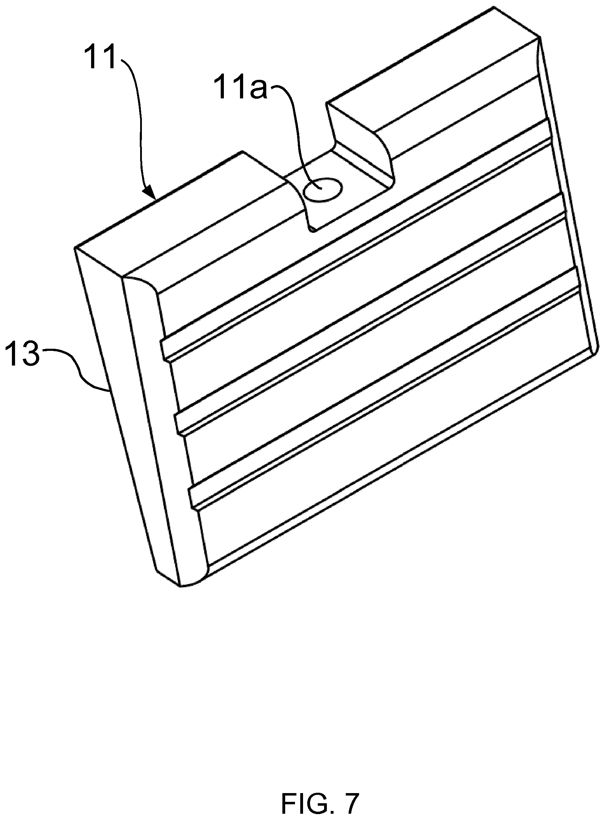

Moreover, the rear load carrier comprises adjustment means, which are provided on the base body 4 in order to move the second retaining element 6 for adjusting the position thereof in the base body 4. Specifically, the adjustment means comprise an adjustment element 11, which is a generally plate like component provided on a rear side of the second retaining element 6 facing away from the first retaining element 5 in the base body 4. The adjustment element 11 is moveably arranged in the base body 4 in the vertical direction in a plane perpendicular to the pivot plane of the first retaining element 5. As may be clearly obtained from figures 5 to 7 of the drawings, the second retaining element 6 and the adjustment element 11 have engagement surfaces 12, 13 at their sides facing to each other, in which they are in surface-to-surface contact. The engagement surfaces 12, 13 are designed in order to convert a movement of the adjustment element 11 in the upward direction into an adjustment movement of the second retaining element 6 along the adjustment path of the first retaining element 5, in order to move the second retaining element 6 towards the pivot axis X.

The adjustment means comprise an adjusting screw 14, which is held rotatably around its screw axis Y in a corresponding hole 4a in a top plate of the base body 4 from the outside thereof and is screwed into a threaded hole 11a of the adjustment element 11. With such an arrangement, the adjustment element 11 is linearly moved in the downward direction, when the adjusting screw 14 screwed out of the adjustment element 11 and vice versa.

The rear load carrier further comprises an actuation device 15, which is coupled to the first retaining element 5 for pivoting the same to and fro between a retaining position, in which the two retaining elements 5, 6 are close to each other in order to engage around a connection head of a trailer coupling in the receptacle, and an insertion position, in which the retaining elements 5, 6 are spaced apart such that the connection device 3 can be placed on or removed from the connection head of the trailer coupling. In the embodiment shown the first retaining element 5 is pivotably mounted on the base body 4 at an upper portion opposite the open bottom side thereof.

The actuation device 15 has an actuation lever 16, which is pivotably at its one end region to the base body 4 and is pivotably connected to the first retaining element 5 by means of an intermediate lever 17 of the actuation device 15 such that a pivot movement of the actuation lever 16 is converted into a pivot movement of the first retaining element 5 about its pivot axis X. In the present case, the actuation lever 16 an the intermediate lever 17 of the actuation device 15 of pivotable substantially in the vertical direction, i. e. in a vertical plane.

In order to bring the connection device 3 from its retaining position shown in the figures into an insertion position the actuation lever 16 is pivoted around its horizontal pivot axis in clockwise direction upwards. As a consequence, the lower end of the first retaining element 5 is drawn away from the second retaining element 6 carrying out a pivot movement about its pivot axis. As a result of this pivot movement the receptacle is opened. It is to be noted, that the stationary second retaining element 6 does not contribute to the opening of the receptacle.

In the completely opened insertion position, the two retaining elements 5, 6 have the maximum distance to each other at their lower ends. If the connection device 3 is to be closed, the actuation lever 16 is pushed downwardly carrying out a pivot movement in counter clockwise direction about its pivot axis, whereas the second retaining element 6 is not moved. If the connection device 3 is to be connected to a new trailer coupling, the connection head of which has a smaller size, the second retaining element 6 is moved towards the pivot axis X of the first retaining element 5, by turning the adjusting screw 14, so that it is moved out of the threaded hole 11a of the adjustment element 11. Since the adjusting screw 14 cannot axially move, the adjustment element 11 is moved downwardly, and this downward movement is translat-ed/converted into the desired adjustment movement of the second retaining element 6 by the cooperation of the engagement surfaces 12, 13 on the rear side of the second retaining element 6 and the front side of the adjustment element 11.

If the connection device 3 is to fixed to the bigger connection head, the adjusting screw 14 is turned into a threaded hole of the adjustment element 11, which consequence is moved in the upward direction, so that the engagement surfaces 12, 13 of the adjustment element 11 and the second retaining element 6 get out of contact and the second retaining element 6 can be pushed away from the pivot axis X of the first retaining element 5, when the connection device 3 is pushed onto the connection head of the trailer coupling.

### List of reference signs

- 1: supporting frame
- 2: rails
- 3: connection device
- 4: base body
- 4a: hole
- 5: first retaining element
- 5a: contact surface
- 5b: lay-on surface
- 6: second retaining element
- 6a: contact surface
- 6b: lay-on surface
- 7: pivot bolt
- 8: guiding means
- 9: guiding holes
- 10: guiding pins
- 11: adjustment element
- 11a: threaded hole
- 12: engagement surface
- 13: engagement surface
- 14: adjusting screw
- 15: actuation device
- 16: actuation lever
- 17: intermediate lever

- X: pivot axis
- Y: screw axis

## Claims

1. Rear load carrier for mounting on a motor vehicle with a supporting frame (1), and
a connection device (3) provided on the supporting frame (1) for fastening the rear load carrier to a trailer coupling on the vehicle side,
wherein the connection device (3) comprises
a base body (4) open at a bottom side thereof,
two retaining elements which form a downwardly open receptacle between them for a connection head of the trailer coupling, the first retaining element (5) being mounted on the base body (4) so as to be pivotable about a pivot axis (X) preferably in a vertical pivot plane, and
an actuation device (15) coupled to the first retaining element (5) for pivoting the first retaining element (5) to and fro between a retaining position, in which the retaining elements are close to each other in order to engage around a connection head of a trailer coupling in the receptacle, and an insertion position, in which the retaining elements are spaced apart such that the connection device (3) can be placed on or removed from the connection head,
**characterized in that** the second retaining element (6) is a stationary retaining element mounted to the base body (4) in a non pivotable manner, wherein the position of the second retaining element (6) in the base body (4) can be adjusted along an adjustment path, in particular in a linear manner, in a direction transverse to the pivot axis (X) of the first retaining element (5) in order to adjust the distance between the second retaining element (6) and the pivot axis (X) of the first retaining element (5) in dependence of the size of a connection head, to which the rear load carrier is to be fastened.

2. Rear load carrier according to claim 1, **characterized in that** guiding means (8) are provided in order to guide an adjustment movement of the second retaining element (6) in order to adjust the distance between the second retaining element (6) and the pivot axis (X) of the first retaining element (5).

3. Rear load carrier according to claim 2, **characterized in that** the guiding means (8) are designed so as to guide an adjustment movement of the second retaining element (6) in a direction perpendicular to the pivot axis (X), in particular in the pivot plane, of the first retaining element (5) and preferably horizontally, in order to adjust the distance between the second retaining element (6) and the pivot axis (X) of the first retaining element (5).

4. Rear load carrier according to claim 2 or 3, **characterized in that** the guiding means (8) are provided to guide the movement of the second retaining element (6) on an upper end region and a lower end region thereof.

5. Rear load carrier according to claim 4, **characterized in that** the guiding means (8) comprise oblong guiding holes (9) and guiding pins (10) in engagement therewith provided on lateral sides of the second retaining element (6) and lateral sides of the base body (4) or a component fixed to the base body (4), wherein, in particular, the oblong guiding holes (9) are provided in the second retaining element (6) and the guiding pins (10) are provided on the base body (4) or the component attached thereto.

6. Rear load carrier according to any preceding claim, **characterized in that** adjustment means are provided on the base body (4) to move the second retaining element (6) in order to adjust the position of the second retaining element (6) in the base body (4).

7. Rear load carrier according to claim 6, **characterized in that** the adjusting means comprise an adjustment element (11) which is provided on a rear side of the second retaining element (6) facing away from the first retaining element (5) in the base body (4), that the adjustment element (11) is movable in the base body (4) in a direction transverse to the adjustment path, and that the second retaining element (6) and/or the adjustment element (11) have engagement surfaces in contact with each other and designed in order to convert a movement of the adjustment element (11) in one direction into an adjustment movement of the second retaining element (6) along the adjustment path in order to adjust the distance between the second retaining element (6) and the pivot axis (X) of the first retaining element (5).

8. Rear load carrier according to claim 7, **characterized in that** the adjusting means comprise an adjusting screw (14) which is extends through a corresponding hole (4a) of the base body (4) from the outside thereof into the base body (4), wherein the adjusting screw (14) is connected to the adjustment element (11) in such a way that the adjustment element (11) is linearly moved when the adjusting screw (14) is screwed into or out of the base body (4), and wherein, in particular, the adjusting screw (14) is held in the bore (4a) of the base body (4) rotatably around its screw axis, but in an axially fixed position and is screwed into a threaded hole (11a) of the adjustment element (11).

9. Rear load carrier according to claim 8, **characterized in that** the adjustment element (11) is movable in a plane perpendicular to the pivot plane of the first retaining element (5), wherein, in particular, the adjustment element (11) is movable vertically and the adjusting screw (14) is provided at the top side or the bottom side of the base body (4) or the adjustment element (11) is movable horizontally and die adjusting screw (14) is provided on a lateral side of the base body (4).

10. Rear load carrier according to any of the preceding claims, **characterized in that** the first retaining element (5) is pivotably mounted on the base body (4) at an upper portion opposite the open bottom side thereof.

11. The rear load carrier according to any of the preceding claims, **characterized in that** the actuation device (15) has an actuation lever (16) which is pivotably mounted at its one end region to the base body (4) and is connected, in particular flexibly, to the first retaining element (5) by means of an intermediate (17) lever of the actuation device (15) such that a pivot movement of the actuation lever (16) is converted into a pivot movement of the first retaining element (5) about its pivot axis (X).

12. The rear load carrier according to claim 11, **characterized in that** the actuation lever (16) and the intermediate (17) lever of the actuation device (15) are pivotable substantially in the vertical direction.

13. The rear load carrier according to any of claims 10 to 12, **characterized in that** a locking device is provided in order to lock the actuation device (15) in an end position corresponding to the retaining position of the first retaining element (5).

14. Rear load carrier according to any of the preceding claims, **characterized in that** the retaining elements (5, 6) each comprise a lay-on surface which is designed to abut a neck of the connection head which adjoins a spherical section of the connection head on the bottom side, the lay-on surface in particular having a contour corresponding to a portion of a cylinder shell.

15. Rear load carrier according to any of the preceding claims, **characterized in that** the retaining elements (5, 6) each comprise a contact surface which is designed to abut a spherical section of the connection head, the contact surface in particular having a contour corresponding to a partial section of a sphere.

## Amended claims

### Amended claims in accordance with Rule 137(2) EPC.

1. Rear load carrier for mounting on a motor vehicle with
a supporting frame (1), and
a connection device (3) provided on the supporting frame (1) for fastening the rear load carrier to a trailer coupling on the vehicle side,
wherein the connection device (3) comprises
a base body (4) open at a bottom side thereof,
two retaining elements which form a downwardly open receptacle between them for a connection head of the trailer coupling, the first retaining element (5) being mounted on the base body (4) so as to be pivotable about a pivot axis (X) preferably in a vertical pivot plane, and
an actuation device (15) coupled to the first retaining element (5) for pivoting the first retaining element (5) to and fro between a retaining position, in which the retaining elements are close to each other in order to engage around a connection head of a trailer coupling in the receptacle, and an insertion position, in which the retaining elements are spaced apart such that the connection device (3) can be placed on or removed from the connection head,
wherein the second retaining element (6) is a stationary retaining element mounted to the base body (4) in a non pivotable manner, wherein the position of the second retaining element (6) in the base body (4) can be adjusted along an adjustment path, in particular in a linear manner in a direction transverse to the pivot axis (X) of the first retaining element (5) in order to adjust the distance between the second retaining element (6) and the pivot axis (X) of the first retaining element (5) in dependence of the size of a connection head, to which the rear load carrier is to be fastened, wherein adjustment means are provided on the base body (4) to move the second retaining element (6) in order to adjust the position of the second retaining element (6) in the base body (4), and wherein the adjusting means comprise an adjustment element (11) which is provided on a rear side of the second retaining element (6) facing away from the first retaining element (5) in the base body (4), **characterized in that** the adjustment element (11) is movable in the base body (4) in a direction transverse to the adjustment path, and that the second retaining element (6) and/or the adjustment element (11) have engagement surfaces in contact with each other and designed in order to convert a movement of the adjustment element (11) in one direction into an adjustment movement of the second retaining element (6) along the adjustment path in order to adjust the distance between the second retaining element (6) and the pivot axis (X) of the first retaining element (5).

2. Rear load carrier according to claim 1, **characterized in that** guiding means (8) are provided in order to guide an adjustment movement of the second retaining element (6) in order to adjust the distance between the second retaining element (6) and the pivot axis (X) of the first retaining element (5).

3. Rear load carrier according to claim 2, **characterized in that** the guiding means (8) are designed so as to guide an adjustment movement of the second retaining element (6) in a direction perpendicular to the pivot axis (X), in particular in the pivot plane, of the first retaining element (5) and preferably horizontally, in order to adjust the distance between the second retaining element (6) and the pivot axis (X) of the first retaining element (5).

4. Rear load carrier according to claim 2 or 3, **characterized in that** the guiding means (8) are provided to guide the movement of the second retaining element (6) on an upper end region and a lower end region thereof.

5. Rear load carrier according to claim 4, **characterized in that** the guiding means (8) comprise oblong guiding holes (9) and guiding pins (10) in engagement therewith provided on lateral sides of the second retaining element (6) and lateral sides of the base body (4) or a component fixed to the base body (4), wherein, in particular, the oblong guiding holes (9) are provided in the second retaining element (6) and the guiding pins (10) are provided on the base body (4) or the component attached thereto.

6. Rear load carrier according to any proceeding claim, **characterized in that** the adjusting means comprise an adjusting screw (14) which is extends through a corresponding hole (4a) of the base body (4) from the outside thereof into the base body (4), wherein the adjusting screw (14) is connected to the adjustment element (11) in such a way that the adjustment element (11) is linearly moved when the adjusting screw (14) is screwed into or out of the base body (4), and wherein, in particular, the adjusting screw (14) is held in the bore (4a) of the base body (4) rotatably around its screw axis, but in an axially fixed position and is screwed into a threaded hole (11a) of the adjustment element (11).

7. Rear load carrier according to claim 6, **characterized in that** the adjustment element (11) is movable in a plane perpendicular to the pivot plane of the first retaining element (5), wherein, in particular, the adjustment element (11) is movable vertically and the adjusting screw (14) is provided at the top side or the bottom side of the base body (4) or the adjustment element (11) is movable horizontally and die adjusting screw (14) is provided on a lateral side of the base body (4).

8. Rear load carrier according to any of the preceding claims, **characterized in that** the first retaining element (5) is pivotably mounted on the base body (4) at an upper portion opposite the open bottom side thereof.

9. The rear load carrier according to any of the preceding claims, **characterized in that** the actuation device (15) has an actuation lever (16) which is pivotably mounted at its one end region to the base body (4) and is connected, in particular flexibly, to the first retaining element (5) by means of an intermediate (17) lever of the actuation device (15) such that a pivot movement of the actuation lever (16) is converted into a pivot movement of the first retaining element (5) about its pivot axis (X).

10. The rear load carrier according to claim 9, **characterized in that** the actuation lever (16) and the intermediate (17) lever of the actuation device (15) are pivotable substantially in the vertical direction.

11. The rear load carrier according to any of claims 9 to 10, **characterized in that** a locking device is provided in order to lock the actuation device (15) in an end position corresponding to the retaining position of the first retaining element (5).

12. Rear load carrier according to any of the preceding claims, **characterized in that** the retaining elements (5, 6) each comprise a lay-on surface which is designed to abut a neck of the connection head which adjoins a spherical section of the connection head on the bottom side, the lay-on surface in particular having a contour corresponding to a portion of a cylinder shell.

13. Rear load carrier according to any of the preceding claims, **characterized in that** the retaining elements (5, 6) each comprise a contact surface which is designed to abut a spherical section of the connection head, the contact surface in particular having a contour corresponding to a partial section of a sphere.
